# EUROPÄISCHE PATENTSCHRIFT

(11) **EP 1 599 387 B1**
(45) Veröffentlichungstag und Bekanntmachung des Hinweises auf die Patenterteilung: **31.10.2007**
(21) Anmeldenummer: 04717043.6
(22) Anmeldetag: 04.03.2004
(51) Int. Cl.: B65C 9/02, B65C 9/06, B65C 3/14, B65B 43/44, B65B 61/26

(54) **ENTSTAPELVORRICHTUNG**
DE-STACKING DEVICE
DISPOSITIF DE DESEMPILEMENT

(30) Priorität: 04.03.2003 DE 10309553; 12.06.2003 DE 10326993; 26.06.2003 DE 10328973
(43) Veröffentlichungstag der Anmeldung: 30.11.2005
(73) Patentinhaber: Siedlaczek, Udo, 47638 Straelen (DE)
(72) Erfinder: Siedlaczek, Udo, 47638 Straelen (DE)
(74) Vertreter: Gesthuysen, von Rohr & Eggert
(86) Internationale Anmeldenummer: PCT/EP2004/002189
(87) Internationale Veröffentlichungsnummer: WO 2004/078595

(56) Entgegenhaltungen:
- EP-A- 0 105 532
- WO-A-00/15502
- DE-A- 10 027 749

## Beschreibung

Die Erfindung betrifft eine Entstapelvorrichtung nach dem Oberbegriff des Anspruchs 1 und wie bekannt aus der WO 00/15502 A1. Des weiteren betrifft die Erfindung eine Topfmaschine mit einer Entstapelvorrichtung der vorgenannten Art.

Zum Eintopfen von Pflanzen werden in Gärtnereien Töpfe verwendet, die etikettiert oder in anderer Weise beschriftet sind und eine Angabe über die einzutopfende Pflanze enthalten. Zu diesem Zweck ist es üblich, daß den Gärtnereien bereits entsprechend etikettierte Töpfe zur Verfügung gestellt werden. Diese Töpfe werden dann in Stapelform einer Topfmaschine zugeführt, wobei es zum Eintopfen zunächst erforderlich ist, den Stapel der Töpfe zu entstapeln. Nach dem Entstapeln bzw. Vereinzeln werden die einzelnen Blumentöpfe auf einer Fördereinrichtung der Topfinaschine mit Erde und der betreffenden Pflanze befüllt. Nachteilig ist, daß es bei diesen bekannten Verfahren erforderlich ist, daß dem Eintopfen ein separater Vorgang des Markierens bzw. Etikettierens der Blumentöpfe vorangeht, was in Regel durch ein Spezialunternehmen vorgenommen wird. Beim Eintopfen ist stets darauf zu achten, daß in die in einer bestimmten Weise etikettierten Blumentöpfe auch die betreffenden Pflanzen eingetopft werden.

Aufgabe der vorliegenden Erfindung ist es, hier Abhilfe zu schaffen.

Diese Aufgabe wird erfindungsgemäß bei einer Entstapelvorrichtung der eingangs genannten Art durch die Merkmale des Anspruchs 1 gelöst. Die Erfindung unterscheidet sich von dem bekannten Stand der Technik dadurch, daß die Entstapelvorrichtung nicht nur zum Entstapeln des zu markierenden Behälters vorgesehen ist, sondern gleichzeitig und unmittelbar auch zum Markieren des Behälters. Dabei bilden die Entstapeleinrichtung und die Markiereinrichtung eine gemeinsame Baugruppe, mit der sowohl der Entstapelvorgang als auch der Markiervorgang durchgeführt werden können. Das, Zusammenführen der Funktion "Entstapeln" und "Markieren" in eine Baugruppe führt nämlich dazu, daß der erforderliche Arbeitsraum zur Durchführung des jeweiligen Vorgangs deutlich gegenüber solchen Ausführungsformen gesenkt wer-den kann, bei denen der Entstapelvorgang und der Markiervorgang in voneinander unabhängigen, getrennten Baugruppen stattfindet. Erfindungsgemäß wird der Entstapelvorrichtung somit eine weitere Funktion zugewiesen, wobei der üblicherweise zum Entstapeln und zum Markieren erforderliche Arbeitsraum durch die Erfindung deutlich gesenkt werden kann. Da die Entstapelvorrichtung sowohl die notwendigen Mittel zum Entstapeln als auch die notwendigen Mittel zur Markierung des Behälters aufweist, ist es in einfacher Weise möglich, den Entstapelvorgang mit dem Markiervorgang kinematisch zu koppeln bzw. beide Arbeitsprozesse aufeinander abzustimmen. Dabei wird unter "kinematischer Kopplung" verstanden, daß sich jedenfalls die relevanten Teile der Markiereinrichtung und der Entstapeleinrichtung aufgrund der unmittelbaren Verbindung der beiden Einrichtungen gemeinsam bewegen. Da üblicherweise eine Entstapelvorrichtung zum Entstapeln der Behälter und eine Markiervorrichtung zum Markieren der Behälter als räumlich voneinander getrennte Baugruppen vorgesehen sind, ist es aus Platzgründen grundsätzlich schwierig, eine Markiervorrichtung in einem hinreichend geringen Abstand zum Behälterstapel anzuordnen, um eine exakte Anbringung der Markierung zu gewährleisten. Durch die erfindungsgemäße Kopplung der Entstapelvorrichtung mit der Markiereinrichtung läßt sich letztere hinreichend nahe am Behälterstapel anordnen, um eine exakte Anordnung der Markierung auf dem zu markierenden Behälter zu gewährleisten. Durch die erfindungsgemäße Entstapelvorrichtung ist es durch die räumlich verbundene Anordnung der Mittel zum Entstapeln und der Mittel zum Markieren der Behälter außerdem möglich, eine außerordentlich schnelle Markierung zu realisieren. Der Markiervorgang für jeden einzelnen Behälter schränkt dabei nicht den Entstapelvorgang ein. Durch die Erfindung kann die Entstapelung mit kombinierter Markierung der Behälter genauso schnell erfolgen, wie beim Stand der Technik, wo lediglich entstapelt wird.

Im übrigen ist darauf hinzuweisen, daß als Behälter sowohl konische kreisförmige Behälter oder auch eckige Behälter entstapelt und markiert werden können. Der Anwendungsbereich umfaßt beispielsweise das Etikettieren oder Bedrucken von Blumentöpfen oder auch von Joghurtbechem.

Um den erforderlichen Arbeitsraum zum Entstapeln und zum Markieren der Behälter weiter zu senken, ist bei einer bevorzugten Ausführungsform der Erfindung vorgesehen, daß die Markiereinrichtung und der obere und/oder der untere Haltearm und/oder der Vereinzelungsarm in einer gemeinsamen, insbesondere vertikalen Ebene angeordnet sind, wobei die Mittellängsachse des Stapels im Bereich der Entstapelvorrichtung im wesentlichen in der Ebene und/oder parallel dazu verläuft. In diesem Zusammenhang wird darauf hingewiesen, daß die Markiereinrichtung und die Mittel zum Entstapeln des Behälters, nämlich der obere und der untere Haltearm sowie bedarfsweise der Vereinzelungsarm, möglichst so angeordnet sein können, daß sich eine kompakte Bauweise der Entstapelvorrichtung ergibt und der erforderliche Arbeitsraum zum Entstapeln und Markieren der Behälter, das heißt der Abstand von der Markiereinrichtung zum Stapel, weitgehend reduziert wird.

Im übrigen ist darauf hinzuweisen, daß die erfindungsgemäße Ausgestaltung nicht nur bei Neuanlagen realisiert werden kann, sondern daß auch bestehende Vorrichtungen ohne weiteres nachgerüstet werden können.

Vorzugsweise werden die Behälter durch Etiketten markiert, wobei die Markiereinrichtung eine Etikettiereinrichtung aufweisen kann, die als pneumatische Druckstoß- bzw. Ansaugeinrichtung zum Aufbringen eines Etiketts auf dem Behälter ausgebildet sein kann. Die Etikettiereinrichtung ist vorzugsweise mit dem oberen Haltearm und/oder mit dem unteren Haltearm und/oder mit dem Vereinzelungsarm verbunden, insbesondere unterhalb des unteren Haltearms angeordnet und mit diesem verbunden. Wesentlich ist dabei, daß es auf grund der direkten Zuordnung bzw. unmittelbaren Befestigung der Etikettiereinrichtung an dem jeweiligen Arm zu keiner gegenseitigen Behinderung der Mittel zum Entstapeln des Behälters und Mittel zur Markierung des Behälters kommen kann. Schließlich ist von Bedeutung, daß trotz der Kopplung der Etikettiereinrichtung mit dem betreffenden Arm der Zugriff auf die Mittel zum Entstapeln der Behälter und auf die Etikettiereinrichtung in einfacher Weise möglich ist, um Wartungen und Reparaturen leicht ausführen zu können.

Statt der Etikettiereinrichtung kann, worauf nachfolgend noch näher eingegangen wird, die Entstapelvorrichtung auch eine Sprüheinrichtung zum Aufsprühen einer Markierung aufweisen. Die nachstehenden Ausführungen beziehen sich im wesentlichen auf die Etikettiereinrichtung, sind jedoch in gleicher Weise in Bezug auf die Sprüheinrichtung zu verstehen, ohne daß es einer besonderen Erwähnung bedarf.

Die Etikettiereinrichtung und/oder die Haltearme und/oder der Vereinzelungsarm sind aufgrund der festen Verbindung gemeinsam bewegbar relativ zum Stapel bzw. zu dem zu etikettierenden Behälter ausgebildet. Dabei erfolgt der Entstapelvorgang in üblicher und in an sich aus dem Stand der Technik bekannter Weise, wobei sich aufgrund der mechanischen Kopplung zwischen der Bewegung der Etikettiereinrichtung und der Bewegung wenigstens eines der beiden Haltearme und/oder des Vereinzelungsarms eine kinematische Kopplung ergibt, was einen reibungslosen Ablauf des Entstapelvorgangs und der Markierung der Behälter ermöglicht.

Die Etikettiereinrichtung kann beispielsweise in seitlicher Richtung zu einem zu markierenden Behälter zwischen einer dem Behälter abgewandten Rücksetzstellung und einer dem Behälter zugewandten Aufbringstellung entlang eines Verstellweges bewegbar ausgebildet sein. In der Aufbringstellung ist die Etikettiereinrichtung vorzugsweise an der dem Behälter zugewandten vorderen Verstellgrenze des Verstellweges angeordnet, während in der Rücksetzstellung die Etikettiereinrichtung an der dem Behälter abgewandten hinteren Verstellgrenze des Verstellweges der Etikettiereinrichtung angeordnet sein kann. Die vordere Verstellgrenze, das heißt der lichte Abstand zwischen der Etikettiereinrichtung und dem zu etikettierenden Behälter beträgt vorzugsweise weniger als 10 cm. Besonders günstig ist es, diesen Abstand zwischen 1 und 5 cm zu wählen, wobei jeder Zwischenwert möglich ist, ohne daß es einer separaten Erwähnung bedarf. Die Etikettiereinrichtung kann somit mit dem jeweiligen Arm von der Rücksetzstellung in die Aufbringstellung hin und her bewegt bzw. verfahren werden. Der untere Haltearm und/oder der obere Haltearm und/oder der Vereinzelungsarm können in an sich aus dem Stand der Technik bekannter Weise ebenfalls entlang eines ggf. unterschiedlich langen Verstellweges relativ zum Stapel bzw. zu dem zu etikettierenden Behälter bewegbar ausgebildet sein.

Aus Platzgründen ist besonders günstig, wenn der untere Haltearm mit der Etikettiereinrichtung gekoppelt ist, um sich in Richtung des zu etikettierenden Behälters zu bewegen, wobei in einer Endstellung des unteren Haltearms, nämlich wenn der untere Haltearm den zu etikettierenden Behälter gegen eine Weiterbewegung in Entstapelungsrichtung arretiert, die Etikettiereinrichtung in der Aufbringstellung an der dem Behälter zugewandten Verstellgrenze des Verstellweges angeordnet ist und das Etikett somit in möglichst geringem Abstand zu dem zu etikettierenden Behälter aufgebracht werden kann. In der Aufbringstellung kann der Abstand zwischen dem auf den Behälter aufzubringenden Etikett und dem zu etikettierenden Behälter - wie bereits ausgeführt - lediglich wenige Zentimeter betragen. Dadurch wird insbesondere sichergestellt, daß eine genaue Positionierung des Etiketts auf dem Behälter in einfacher Weise durchführbar ist. Alternativ dazu kann die Etikettiereinrichtung grundsätzlich auch mit dem oberen Haltearm oder auch mit dem Vereinzelungsarm verbunden sein, wobei durch die Anordnung der Etikettiereinrichtung sichergestellt sein muß, daß das Etikett störungsfrei und mit hoher Präzision auf den zu etikettierenden Behälter aufgebracht werden kann.

Zur Beschickung der Etikettiereinrichtung kann die Markiereinrichtung eine Etikettensperideeinrichtung aufweisen. Grundsätzlich ist es auch möglich, daß die Markierung der Behälter durch Aufsprühen einer Kennzeichnung aufgebracht wird, wobei die Markiereinrichtung eine Sprüheinrichtung und eine Versorgungseinrichtung für Farbmittel zur Versorgung der Sprüheinrichtung aufweisen kann. Dabei ist es vorzugsweise erfindungsgemäß vorgesehen, daß die Etikettiereinrichtung relativ zur Etikettenspendeeinrichtung oder daß die Sprüheinrichtung relativ zur Versorgungseinrichtung bewegbar ausgebildet ist.

Während die Etikettiereinrichtung bzw. die Sprüheinrichtung zusammen mit dem oberen oder dem unteren Haltearm und/oder mit dem Vereinzelungsarm bewegbar angeordnet sein kann, ist es bei einer bevorzugten Ausführungsform der Erfindung vorgesehen, daß die Etikettenspendeeinrichtung oder die Versorgungseinrichtung ortsfest in Bezug auf die Entstapelvorrichtung bzw. zum Stapel angeordnet ist. Dies bietet den Vorteil, daß die Etikettenspendeeinrichtung bzw. die Versorgungseinrichtung außerhalb von bewegten Bauteilen angeordnet ist und damit eine Gefährdung von Personen beim Zugriff auf die Etikettenspendeeinrichtung bzw. auch die Versorgungseinrichtung ausgeschlossen werden kann. Darüber hinaus ist ein Zugriff auch während des Entstapelns und des Markierens der Behälter in einfacher Weise möglich. Darüber hinaus wird durch die ortsfeste Anordnung der Etikettenspendereinrichtung bzw. der Versorgungseinrichtung sichergestellt, daß der Zuführvorgang der Etiketten bzw. die Versorgung beim Markieren durch die ständige Hin- und Herbewegung des Armes beim Entstapeln nicht behindert wird.

Um einen leichten Zugriff auf die Etikettenspendeeinrichtung bzw. die Versorgungseinrichtung sicherzustellen, kann die Etikettenspendeeinrichtung bzw. die Versorgungseinrichtung im Bereich der dem Behälter abgewandten Verstellgrenze des Verstellweges der Etikettiereinrichtung angeordnet sein. Ist eine Verschmutzung der zum Entstapeln der Behälter vorgesehenen Mittel und der Markiereinrichtung durch eine nach dem Etikettieren vorgesehene Befüllung der Behälter mit einem Befüllgut zu befürchten, so wird durch die Trennung der Etikettiereinrichtung von der Etikettenspendeeinrichtung und der Anordnung der Etikettenspendeeinrichtung im Bereich der dem Behälter abgewandten Verstellgrenze des Verstellweges der Etikettiereinrichtung sichergestellt, daß die Verschmutzung der Etikettenspendeeinrichtung möglichst gering ist und der Anteil solcher Etiketten, die infolge von Verschmutzungen nicht zum Aufbringen auf einen Behälter geeignet sind, minimiert wird.

In der Rücksetzstellung der Etikettiereinrichtung sind die zum Aufbringen des Etiketts vorgesehene Stirnseite der Etikettiereinrichtung und eine Vorschuböffnung der Etikettenspendeeinrichtung zumindest im wesentlichen ausgefluchtet. Dadurch wird der Vorschub ungebrauchter Etiketten in Richtung zur Etikettiereinrichtung und deren Aufnahme in die Etikettiereinrichtung in eine zum Aufbringen auf den Behälter vorgesehene Stellung vereinfacht, was dazu beiträgt, die Etikettiergeschwindigkeit zu erhöhen und Störungen durch im Vorschub blockierte Etiketten zu verhindern.

Wenngleich die Etikettiereinrichtung vorzugsweise zwischen der Rücksetzstellung und der Aufbringstellung entlang einer geradlinigen Bahn bewegt wird, ist es grundsätzlich auch möglich, daß die Etikettiereinrichtung oder die Sprüheinrichtung um den zu markierenden Behälter bewegbar ausgebildet ist oder daß der zu markierende Behälter, vorzugsweise der gesamte Stapel, um die Markiereinrichtung drehbar ausgebildet ist.

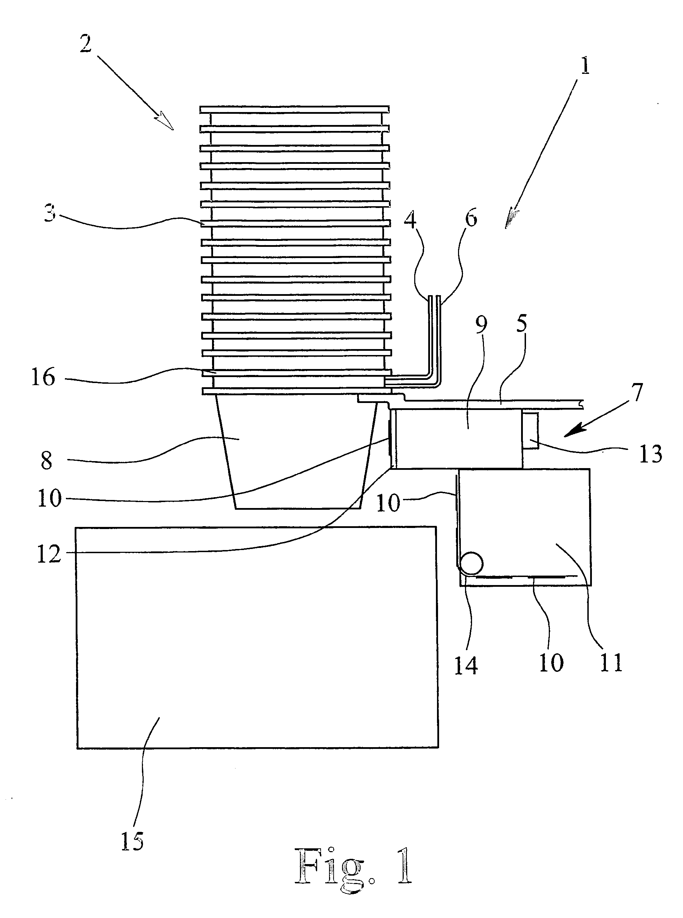

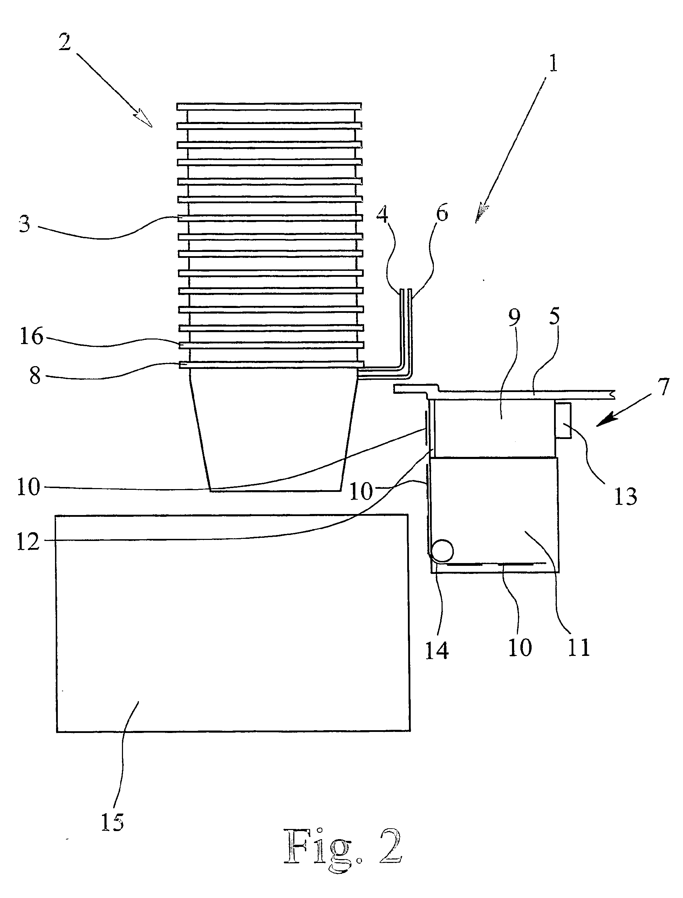

Im übrigen läßt es die Erfindung zu, die in Zusammenhang mit der erfindungsgemäßen Entstapelvorrichtung beschriebenen Merkmale bedarfsweise auch in Kombination mit einer Magaziniervorrichtung vorzusehen. Dies gilt insbesondere für die Ausbildung der Etikettiereinrichtung und den nachfolgend anhand der Fig. 1 und 2 beschriebenen Etikettiervorgang sowie für den Entstapelvorgang.

Die Erfindung wird nachfolgend anhand der Zeichnung ohne Beschränkung des allgemeinen Erfindungsgedankens näher beschrieben. Es zeigen
- Fig. 1: eine Ausführungsform einer erfindungsgemäßen Entstapelvorrichtung mit einer eine Etikettiereinrichtung aufweisenden Markiereinrichtung, wobei die Etikettiereinrichtung an der dem Behälter zugewandten Verstellgrenze eines Verstellweges der Etikettiereinrichtung in der Aufbringstellung angeordnet ist,
- Fig. 2: die in Fig. 1 dargestellte Entstapelvorrichtung mit der Etikettiereinrichtung in einer Rücksetzstellung, wobei die Etikettiereinrichtung an der dem Behälter abgewandten Verstellgrenze des Verstellweges der Etikettiereinrichtung angeordnet ist und
- Fig.3: eine Ausführungsform einer Magaziniervorrichtung.

In Fig. 1 ist eine Entstapelvorrichtung 1 zum zumindest teilweise Entstapeln eines im wesentlichen senkrecht angeordneten Stapels 2 aus ineinander gestapelten Behältern 3 dargestellt. Die Entstapelvorrichtung 1 weist einen oberen Haltearm 4, einen unteren Haltearm 5 und einen zwischen den beiden Haltearmen 4, 5 vorgesehenen Vereinzelungsarm 6 zum Vereinzeln des zu markierenden Behälters 3 vom Stapel 2 auf. Darüber hinaus weist die Entstapelvorrichtung 1 eine Markiereinrichtung 7 auf. Die Markiereinrichtung 7 ist zum Markieren eines zumindest teilweise entstapelten Behälters 8 vorgesehen, wobei eine Etikettiereinrichtung 9 ein angesaugtes Etikett 10 durch einen pneumatischen Druckstoß auf den zu etikettierenden entstapelten Behälter 8 aufbringt. Bei dem jeweils zu markierenden Behälter 8 handelt es sich in der Regel um den letzten Behälter des Stapels 2. Die Markiereinrichtung 7 weist darüber hinaus eine Etikettenspendeeinrichtung 11 auf, die dazu dient, die Etikettiereinrichtung 9 mit Etiketten 10 zu beschicken bzw. zu versorgen.

Bei der Etikettiereinrichtung 9 kann es sich gemäß den Fig. 1 und 2 um eine Unterdruck- und Ablaßbox handeln, die je nach Topfgröße und Etikettenformat in ihrer Größe angepaßt sein kann. Bei der Etikettiereinrichtung 9 und der Etikettenspendeeinrichtung 11 handelt es sich vorzugsweise um von der Funktion her an sich aus dem Stand der Technik bekannte Einrichtungen. Die Etikettiereinrichtung 9 hält auf einer dem zu entstapelten Behälter 8 zugewandten luftdurchlässigen Ansaugplatte 12 ein Etikett 10 durch einen erzeugten Unterdruck in Bereitschaft. Zur Erzeugung des Unterdrucks weist die Etikettiereinrichtung 9 einen Ventilator 13 oder dergleichen Gebläse auf, der auch zur Erzeugung eines Druckstoßes dient, wobei über Druckluft das Etikett 10 von der Ansaugplatte 12 abgestoßen und auf den zu entstapelnden Behälter 8 aufgebracht wird. In diesem Fall wird der Ventilator 13 wahlweise im Saugbetrieb zur Unterdruckerzeugung und im Abblasbetrieb zur Erzeugung von Druckstößen betrieben. Es ist auch möglich, daß ein Kompressor zur Erzeugung eines Druckluftstoßes vorgesehen ist. Dabei kann der Ventilator 13 durchgehend im Saugbetrieb betrieben werden, während der Kompressor zur Erzeugung von Druckluftstößen periodisch betrieben wird. Die Etikettenspendeeinrichtung 11 weist einen bandförmigen Träger 14 mit ungebrauchten Etiketten 10 auf, die zum Etikettieren der Behälter 3 in Richtung zur Etikettiereinrichtung 9 vorgetrieben werden.

In der in Fig. 1 dargestellten Stellung befindet sich die Etikettiereinrichtung 9 in einer Aufbringstellung, wobei die Etikettiereinrichtung 9 im Bereich einer dem zu entstapelnden Behälter 8 zugewandten vorderen Verstellgrenze eines Verstellweges der Etikettiereinrichtung 9 angeordnet ist. Die Etikettiereinrichtung 9 kann gemäß der Fig. 1 zusammen mit dem unteren Halteann 5 bewegbar ausgebildet sein, wobei, vorzugsweise, die Etikettiereinrichtung 9 unterhalb des unteren Haltearms 5 mit diesem verbunden ist. Genauso gut ist jedoch auch möglich, daß - bei entsprechender Ausbildung des oberen Haltearms 4 bzw. des Vereinzelungsarms 6 - die Etikettiereinrichtung 9 mit dem oberen Haltearm 4 oder dem Vereinzelungsarm 6 verbunden und ggf. gemeinsam mit diesen bewegbar ausgebildet ist.

Bei den in den Fig. 1 und 2 dargestellten Ausführungsformen ist es nun so, daß die Markiereinrichtung 7 und die Mittel zum Entstapeln der Behälter 3 des Stapels 2, nämlich der obere Haltearm 4, der Vereinzelungsarm 6 und der untere Haltearm 5, in einer gemeinsamen Ebene angeordnet sind. Dadurch ergibt sich ein besonders platzsparender Aufbau der Entstapelvorrichtung 1. Der Stapel 2 kann vorzugsweise in vertikaler Richtung entstapelt werden, wobei der Stapel 2 im wesentlichen senkrecht angeordnet sein kann. Grundsätzlich kann der Stapel jedoch in jedem Winkel zwischen 60° und 90° zur Horizontalen angeordnet sein. Im übrigen ist es jedoch auch möglich, daß der Stapel 2 in horizontaler Richtung entstapelt wird. Die in den Fig. 1 und 2 dargestellte Entstapelvorrichtung kann in einer Topfmaschine 15 eingesetzt sein, wobei die Topfmaschine 15 beispielsweise zum Befüllen von Blumentöpfen vorgesehen sein kann.

Nachfolgend wird der Entstapelvorgang und die Markierung der Behälter 3 anhand der Fig. 1 und 2 beschrieben. In der Fig. 1 wird der dem zu entstapelnden Behälter 8 nachfolgende Behälter 16 des Stapels 2 durch den oberen Haltearm 4 gehalten. Der zu entstapelnde und zu etikettierende Behälter 8 wird durch den unteren Haltearm 5 gehalten. Die Etikettiereinrichtung 9 befindet sich in der Aufbringstellung, wobei das Etikett 10 in dem in Fig. 1 dargestellten Zustand auf der luftdurchlässigen Ansaugplatte 12 durch den von der Etikettiereinrichtung 9 erzeugten Unterdruck festgehalten wird. Nach dem Abblasen des Etiketts 10 von der luftdurchlässigen Ansaugplatte 12 in Richtung auf den Behälter 8 bzw. nach dem Etikettieren des Behälters 8 wird die Etikettiereinrichtung 9 zusammen mit dem unteren Haltearm 5 von dem Stapel 2 weg bewegt, wobei der etikettierte Behälter 8 über den Vereinzelungsarm 6 von dem Stapel 2 abgelöst wird und in die Topfmaschine 15 zur weiteren Bearbeitung abrutscht.

In Fig. 2 ist nun die Entstapelvorrichtung 1 dargestellt, wobei die Etikettiereinrichtung 9 an der dem Stapel 2 abgewandten hinteren Verstellgrenze des Verstellweges der Etikettiereinrichtung 9 in der Rücksetzstellung dargestellt ist. Die Etikettiereinrichtung 9 ist relativ zu der Etikettenspendeeinrichtung 11 bewegbar ausgebildet. Grundsätzlich ist es natürlich auch möglich, daß die Etikettenspendeeinrichtung 11 und die Etikettiereinrichtung 9 einstückig oder gemeinsam bewegbar ausgebildet sind. Gemäß der in den Fig. 1 und 2 dargestellten Ausführungsform ist jedoch vorgesehen, daß die Etikettenspendeeinrichtung 11 ortsfest mit der Entstapelvorrichtung 1 verbunden ist.

In der Rücksetzstellung der Etikettiereinrichtung 9 ist die zum Aufbringen des Etiketts 10 vorgesehene Ansaugplatte 12 der Etikettiereinrichtung 9 derart mit der Etikettenspendeeinrichtung 11 ausgefluchtet, daß der Vorschub von ungebrauchten Etiketten 10 sichergestellt ist. In der Rücksetzstellung wird die Etikettiereinrichtung 9 mit einem neuen Etikett 10 beschickt und anschließend zusammen mit dem unteren Haltearm 5 erneut in Richtung zum Stapel 2 in die Aufbringstellung bewegt. Die Beschickung der Etikettiereinrichtung 9 mit einem Etikett 10 durch die Etikettenspendeeinrichtung 11 kann ebenfalls pneumatisch erfolgen.

Nach Erreichen der Aufbringstellung greift der an seinem freien Ende bogenabschnittsförmig ausgebildete untere Haltearm 5 unter den Rand des letzten zu etikettierenden Behälters 8. Gleichzeitig wird der obere Haltearm 4 und der Vereinzelungsarm 6 zurückgezogen um anschließend den Rand des nachfolgenden Behälters 16 zu untergreifen. Gleichzeitig kann das Etikett 10 auf den letzten Behälter 8 aufgebracht werden.

Darüber hinaus wird darauf hingewiesen, daß es sich bei der Markiereinrichtung 7 auch um eine Sprüheinrichtung handeln kann. Schließlich ist es auch möglich, daß die Etikettiereinrichtung 9 oder die Sprüheinrichtung zur Markierung eines Behälters 3 um diesen herum bewegt wird oder daß der zu markierende Behälter 3, vorzugsweise der gesamte Stapel 2, eine Drehbewegung ausführt.

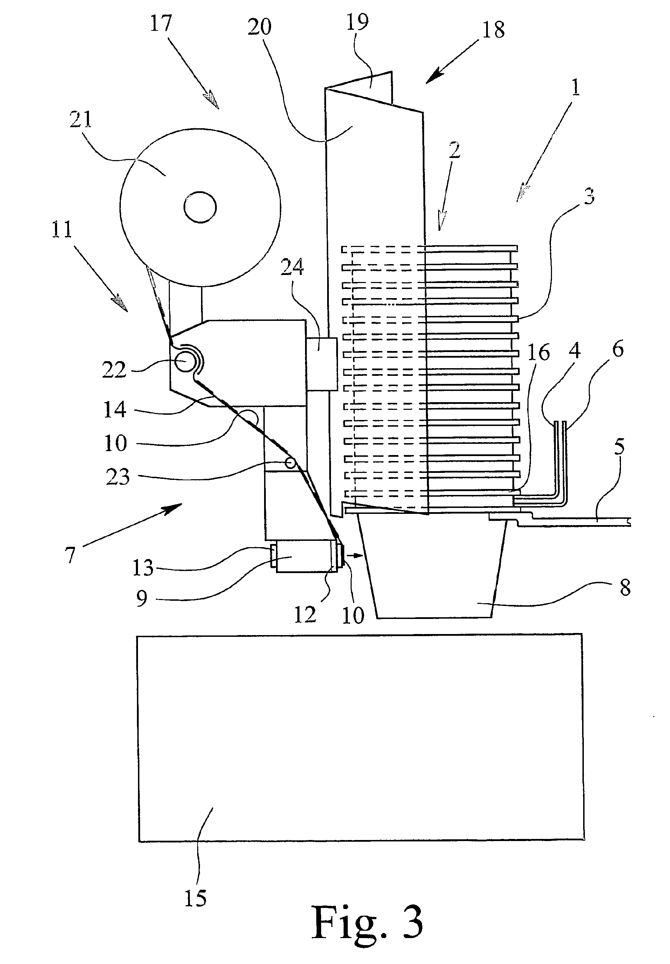

Fig. 3 zeigt eine Entstapelvorrichtung 1 zum zumindest teilweisen Entstapeln eines im wesentlichen senkrecht angeordneten Stapels 2 aus ineinander gestapelten Behältern 3. Die in Fig.3 dargestellte Entstapelvorrichtung 1 kann im wesentlichen der in den Fig. 1 und 2 dargestellten Entstapelvorrichtung 1 entsprechen, mit der Ausnahme, daß die in Fig. 3 dargestellte Entstapelvorrichtung 1 keine Etikettiereinrichtung aufweist, was jedoch grundsätzlich sehr wohl möglich ist.

Darüber hinaus zeigt Fig. 3 eine Magaziniervorrichtung 17 zur Aufnahme und zur Weiterleitung eines Stapels 2 zu markierenden Behälter 3, wobei die Magaziniervorrichtung 17 eine Führungseinrichtung 18 aufweist. Der Stapel 2 ist gemäß der Fig. 3 zwischen einem ersten Führungsabschnitt 19 und einem zweiten Führungsabschnitt 20 der Führungseinrichtung 18 geführt.

Um die Markierung der Behälter 3 in einfacher Weise und mit hoher Präzision in unmittelbarer räumlicher und zeitlicher Nähe zu dem Entstapelvorgang der Behälter 3 durchführen zu können, weist die Magaziniervorrichtung 17 eine Markiereinrichtung 7 zum Markieren des zumindest teilweise entstapelten Behälters 8 auf, wobei die Markiereinrichtung 7 selbst mit der Führungseinrichtung 18 gemäß der Fig. 3 fest verbunden ist. Beispielsweise kann die Markiereinrichtung 7 mit der Führungseinrichtung 18 verschraubt sein.

Die Markiereinrichtung 7 weist gemäß der Fig. 3 eine Etikettiereinrichtung 9 zum Aufbringen eines Etiketts 10 auf den teilweise entstapelten Behälter 8 auf. Die Etikettiereinrichtung 9 kann dabei im wesentlichen der in den Fig. 1 und 2 dargestellten Etikettiereinrichtung 9 entsprechen. Darüber hinaus weist die Markiereinrichtung 7 eine Etikettenspendeeinrichtung 11 auf. Bei der in der Fig. 3 dargestellten Ausführungsform der Magaziniervorrichtung ist es dabei so, daß die Etiketten 10 ausgehend von einem auf einer Rolle 21 aufgewickelten Träger 14 über Umlenkrollen 22, 23 zu der Ansaugplatte 12 der Etikettiereinrichtung 9 transportiert werden, wobei über Druckluft das Etikett 10 von der Ansaugplatte 12 abgestoßen und auf den zu entstapelnden Behälter 8 aufgebracht werden kann. In diesem Fall ist ein Ventilator 13 vorgesehen, der wahlweise im Saugbetrieb zur Unterdruckerzeugung und im Abblasbetrieb zur Erzeugung von Druckstößen betrieben werden kann. Im übrigen ist es so, daß der Vorgang des Aufbringens der Etiketten 10 auf den teilweise entstapelten Behälter 8 in der im Zusammenhang mit den Fig. 1 und 2 beschriebenen Art und Weise erfolgen kann.

Bei der in der Fig. 3 dargestellten Ausführungsform ist weiter vorgesehen, daß die Markiereinrichtung 7 von außen mit der Führungseinrichtung 18 verbunden ist. Eine bevorzugte Ausführungsform sieht vor, daß die Markiereinrichtung 7 mit einem Tragarm 24 der Führungseinrichtung 18 verbunden ist, wobei der Tragarm 24 zur Befestigung der Magaziniervorrichtung 17 an der Topfmaschine 15 vorgesehen sein kann. Der Tragarm 24 kann gemäß der in der Fig. 3 dargestellten Ausführungsform von außen mit dem ersten Führungsabschnitt 19 und/oder mit dem zweiten Führungsabschnitt 20 fest verbunden, vorzugsweise verschweißt sein. Es ist grundsätzlich jedoch auch möglich, die Markiereinrichtung 7 unmittelbar mit dem ersten Führungsabschnitt 19 und/oder dem zweiten Führungsabschnitt 20 zu verbinden.

Die Führungsabschnitte 19, 20 sind winkelförmig miteinander verbunden, wobei der zu führende Stapel 2 der zu markierenden Behälter 3 entlang der Führungseinrichtung 18 zur Befüllung bzw. Weiterverarbeitung der Behälter 3 in Richtung zur Topfmaschine 15 weiterbewegt wird. Der Entstapelvorgang der Behälter 3 des Stapels 2 kann dem anhand der Fig. 1 und 2 beschriebenen Entstapelvorgang entsprechen. Grundsätzlich ist es jedoch auch möglich, daß der Stapel 2 zwischen dem ersten Führungsabschnitt 19 und dem zweiten Führungsabschnitt 20 geführt wird oder daß die Führungseinrichtung 18 schachtartig zueinander angeordnete Führungsabschnitte aufweist, in der der Stapel 2 in Richtung zur Topfmaschine 15 bewegt wird.

Um das Aufblasen des Etiketts 10 ausgehend von der Ansaugplatte 12 auf den zu etikettierenden Behälter 8 zu ermöglichen, ist es bei der in Fig. 3 dargestellten Magaziniervorrichtung 17 so, daß die Etikettiereinrichtung 9 unterhalb der Führungsabschnitte 19, 20 angeordnet ist. Genauso gut ist es jedoch auch möglich, daß der erste Führungsabschnitt 19 und/oder der zweite Führungsabschnitt 20 zumindest eine Ausnehmung im Bereich des zumindest teilweise entstapelten Behälters 8 aufweist, um das Aufbringen des Etiketts 10 auf den Behälter 8 zu ermöglichen.

Schließlich ist darauf hinzuweisen, daß zusätzlich oder an der Stelle einer Etikettiereinrichtung 9 auch eine Sprüheinrichtung zur Markierung der Behälter 8 vorgesehen sein kann. Im übrigen läßt es die Erfindung bedarfsweise zu, den zu markierenden Behälter 8 von beiden Seiten zu markieren, wobei gegebenenfalls die Entstapelvorrichtung 1 ebenfalls zur Markierung der Behälter 8 ausgebildet sein kann.

## Patentansprüche

1. Entstapelvorrichtung mit einer Entstapeleinrichtung (1) zum zumindest teilweise Entstapeln eines Stapels (2) aus ineinander gestapelten Behältern (3) und mit einer Markiereinrichtung (7) zum Markieren eines zumindest teilweise entstapelten Behälters (8), wobei die Entstapeleinrichtung (1) wenigstens einen oberen Haltearm (4) zum Halten des Stapels (2) und wenigstens einen unteren Haltearm (5) zumindest zum Halten eines zu markierenden Behälters (8) aufweist und wobei der Entstapelvorgang und der Markiervorgang gekoppelt sind, **dadurch gekennzeichnet, daß** die Markiereinrichtung (7) mit der Entstapeleinrichtung (1) unmittelbar verbunden ist und daß die Markiereinrichtung (7) und die Entstapeleinrichtung (1) eine gemeinsame Baueinheit derart bilden, daß die Kopplung von Entstapelvorgang und Markiervorgang eine kinematische Kopplung ist, bei der jedenfalls die relevanten Teile der Markiereinrichtung und der Entstapeleinrichtung aufgrund der unmittelbaren Verbindung der beiden Einrichtungen gemeinsam bewegen.

2. Entstapelvorrichtung nach Anspruch 1, **dadurch gekennzeichnet, daß** die Markiereinrichtung (7) und der obere und/oder der untere Haltearm (4, 5) und/oder ein Vereinzelungsarm (6) in einer gemeinsamen, insbesondere vertikalen Ebene angeordnet sind, wobei die Mittellängsachse des Stapels (2) im Bereich der Entstapelvorrichtung (1) im wesentlichen in der Ebene und/oder parallel dazu verläuft.

3. Entstapelvorrichtung nach Anspruch 1 oder 2, **dadurch gekennzeichnet, daß** die Markiereinrichtung (7) eine Etikettiereinrichtung (9) aufweist, wobei die Etikettiereinrichtung (9) vorzugsweise als pneumatische Druckstoß- bzw. Ansaugeinrichtung zum Aufbringen eines Etiketts (10) auf den Behälter (8) ausgebildet ist.

4. Entstapelvorrichtung nach Anspruch 3, **dadurch gekennzeichnet, daß** die Etikettiereinrichtung (9) mit dem oberen Haltearm (4) und/oder dem unteren Haltearm (5) und/oder mit einem Vereinzelungsarm (6) zum Vereinzeln des zu markierenden Behälters (8) vom Stapel (2) verbunden ist, wobei, vorzugsweise, die Etikettiereinrichtung (9) unterhalb des unteren Haltearms (5) angeordnet ist.

5. Entstapelvorrichtung nach Anspruch 3 oder 4, **dadurch gekennzeichnet, daß** die Etikettiereinrichtung (9) und/oder die Haltearme (4, 5) und/oder der Vereinzelungsarm (6) relativ zum Stapel (2) und vorzugsweise gemeinsam mit dem Haltearm (4, 5) und/oder mit dem Vereinzelungsarm (6) bewegbar ausgebildet sind.

6. Entstapelvorrichtung nach einem der Ansprüche 3-5, **dadurch gekennzeichnet, daß** die neben dem zu markierenden Behälter (8) angeordnete Etikettiereinrichtung (9) zwischen einer dem Behälter (8) abgewandten Rücksetzstellung und einer dem Behälter (8) zugewandten Aufbringstellung entlang eines Verstellweges bewegbar ausgebildet ist.

7. Entstapelvorrichtung nach einem der Ansprüche 3-6, **dadurch gekennzeichnet, daß** der untere Haltearm (4) und/oder der obere Haltearm (5) und/oder der Vereinzelungsarm (6) entlang eines Verstellweges relativ zum Stapel (2) bewegbar ausgebildet sind und daß sich die Etikettiereinrichtung (9) in Aufbringstellung befindet, wenn der untere Haltearm (5) oder der obere Haltearm (4) und/oder der Vereinzelungsarm (6) am Stapel (2) angreifen.

8. Entstapelvorrichtung nach einem der Ansprüche 3-7, **dadurch gekennzeichnet, daß** die Markiereinrichtung (7) eine vorzugsweise unterhalb der Etikettiereinrichtung (9) angeordnete Etikettenspendeeinrichtung (11) aufweist.

9. Entstapelvorrichtung nach Anspruch 1 oder 2, **dadurch gekennzeichnet, daß** die Markiereinrichtung (7) eine Sprüheinrichtung zum Aufsprühen einer Markierung auf den Behälter (3) aufweist,

10. Entstapelvorrichtung nach Anspruch 9, **dadurch gekennzeichnet, daß** die Markiereinrichtung (7) eine Versorgungseinrichtung für Farbmittel zur Bereitstellung von Farbmittel für die Sprüheinrichtung aufweist.

11. Entstapelvorrichtung nach Anspruch 4 oder 10, **dadurch gekennzeichnet, daß** die Etikettiereinrichtung (9) relativ zur Etikettenspendeeinrichtung (11) oder daß die Sprüheinrichtung relativ zur Versorgungseinrichtung bewegbar ausgebildet ist und daß, vorzugsweise, die Etikettenspendeeinrichtung (11) oder die Versorgungseinrichtung ortsfest mit der Entstapelvorrichtung (1) verbunden ist.

12. Entstapelvorrichtung nach Anspruch 6 oder 10, **dadurch gekennzeichnet, daß** die Etikettenspendeeinnchtung (11) oder die Versorgungseinrichtung im Bereich der dem Behälter abgewandten Verstellgrenze des Verstellweges der Etikettiereinrichtung (9) angeordnet ist.

13. Entstapelvorrichtung nach Anspruch 11, **dadurch gekennzeichnet, daß** in der Rücksetzstellung der Etikettiereinrichtung (9) die zum Aufbringen des Etiketts (10) vorgesehene Stirnseite der Etikettiereinrichtung (9) und eine Etiketten-Vorschuböffnung der Etikettenspendeeinrichtung (11) im wesentlichen ausgefluchtet sind.

14. Entstapelvorrichtung nach Anspruch 3 oder 9, **dadurch gekennzeichnet, daß** die Etikettiereinrichtung (9) oder die Sprüheinrichtung um den zu markierenden Behälter (3) oder daß der zu markierende Behälter (3), vorzugsweise der Stapel (2), relativ zur der Markiereinrichtung (7) drehbar ausgebildet ist.

15. Topfmaschine (15) zur Befüllung von Blumentöpfen mit einer Entstapelvorrichtung nach einem der vorhergehenden Ansprüche.

## Claims

1. De-stacking device with a de-stacking unit (1) for at least partial de-stacking of a stack (2) of containers (3) nested in each other and with a marking device (7) for marking an at least partly de-stacked container (8), wherein the de-stacking unit (1) has at least one upper holding arm (4) for holding the stack (2) and at least one lower arm (5) at least for holding one container (8) being marked and wherein the de-stacking step and the marking step are coupled, **characterized in that** the marking device (7) is directly connected to the de-stacking unit (1), and the marking device (7) and the de-stacking unit (1) forming a common subassembly in such a way, that the coupling of de-stacking step and marking step is a cinematic coupling, whereby the relevant parts of the marking device and the de-stacking device at least move jointly, due to the direct connection of the two devices.

2. De-stacking device per claim 1, **characterized in that** the marking device (7) and the upper and/or the lower holding arm (4, 5) and/or a separating arm (6) are arranged in a common plane, especially vertical plane, and the center longitudinal axis of the stack (2) in the area of the de-stacking device (1) runs essentially in the plane and/or parallel to it.

3. De-stacking device per claim 1 or 2, **characterized in that** the marking device (7) has a labeling device (9) which is preferably configured as a pneumatic blowing or suction type device for affixing a label (10) to the container (8).

4. De-stacking devices per claim 3, **characterized in that** the labeling device (9) is joined to the upper holding arm (4) and/or to the lower holding arm (5) and/or to the separating arm (6) for separating the container (8) being marked from the stack (2), wherein preferably the labeling device (9) is arranged beneath the lower holding arm (5).

5. De-stacking device per claim 3 or 4, **characterized in that** the labeling device (9) and/or the holding arms (4, 5) and/or the separating arm (6) can move relative to the stack (2) and preferably together with the holding arm (4, 5) and/or with the separating arm (6).

6. De-stacking device per claim 3 to 5, **characterized in that** the labeling device (9) arranged next to the container (8) being marked can move along a travel path between a return position away from the container (8) and an affixing position facing the container (8).

7. De-stacking device per claim 3 to 6, **characterized in that** the lower holding arm (4) and/or the upper holding arm (5) and/or the separating arm (6) can move along a travel path relative to the stack (2) and the labeling device (9) is in the affixing position when the lower holding arm (5) or the upper holding arm (4) and/or the separating arm (6) grabs the stack (2).

8. De-stacking device per claim 3 to 7, **characterized in that** the marking device (7) has a label dispenser (11) arranged preferably underneath the labeling device (9).

9. De-stacking device per claim 1 or 2, **characterized in that** the marking device (7) has a spraying device for spraying a marking onto the container (3).

10. De-stacking device per claim 9, **characterized in that** the marking device (7) has a reservoir for ink for providing ink to the spraying device.

11. De-stacking device per claim 4 or 10, **characterized in that** the labeling device (9) can move relative to the label dispenser (11) or the spraying device can move relative to the ink reservoir and **in that** the label dispenser (11) or the ink reservoir is preferably fixed stationary to the dc-stacking device (1).

12. De-stacking device per claim 6 or 10, **characterized in that** the label dispenser (11) or the ink reservoir is arranged in the region of the end of the travel path of the labeling device (9) facing away from the container.

13. De-stacking device per claim 11, **characterized in that** the front side of the labeling device (9) designed to affix the label (10) and a label feed opening of the label dispenser (11) are essentially aligned in the return position of the labeling device (9).

14. De-stacking device per claim 3 or 9, **characterized in that** the labeling device (9) or the spraying device is configured to be able to rotate about the container (3) being marked or the container (3) being marked, and preferably the stack (2), can rotate relative to the marking device (7).

15. Potting machine (15) for the filling of flower pots with a de-stacking device according to one of the preceding claims.

## Revendications

1. Système de désempilement comprenant un dispositif de désempilement (1) pour au moins partiellement désempiler une pile (2) de récipients (3) empilés les uns dans les autres et comprenant un dispositif de marquage (7) pour marquer un récipient (8) au moins partiellement désempilé, le dispositif de désempilement (1) présentant au moins un bras de retenue supérieur (4) pour retenir la pile (2) et au moins un bras de retenue inférieur (5) au moins pour retenir un récipient à marquer (8), et l'opération de désempilement et l'opération de marquage étant accouplées, **caractérisé en ce que** le dispositif de marquage (7) est directement connecté au dispositif de désempilement (1) et **en ce que** le dispositif de marquage (7) et le dispositif de désempilement (1) forment une unité constructive commune, de telle sorte que l'accouplement de l'opération de désempilement et de l'opération de marquage soit un accouplement cinématique, dans lequel à chaque fois les parties concernées du dispositif de marquage et du dispositif de désempilement se déplacent conjointement du fait de la connexion directe des deux dispositifs.

2. Système de désempilement selon la revendication 1, **caractérisé en ce que** le dispositif de marquage (7) et le bras de retenue supérieur et/ou le bras de retenue inférieur (4 ,5) et/ou un bras de séparation (6) sont disposés dans un plan commun, notamment vertical, l'axe médian longitudinal de la pile (2) s'étendant dans la région du dispositif de désempilement (1) sensiblement dans le plan et/ou parallèlement à celui-ci.

3. Système de désempilement selon la revendication 1 ou 2, **caractérisé en ce que** le dispositif de marquage (7) présente un dispositif d'étiquetage (9), le dispositif d'étiquetage (9) étant de préférence réalisé sous forme de dispositif pneumatique d'aspiration ou de butée par pression pour appliquer une étiquette (10) sur le récipient (8).

4. Système de désempilement selon la revendication 3, **caractérisé en ce que** le dispositif d'étiquetage (9) est connecté au bras de retenue supérieur (4) et/ou au bras de retenue inférieur (5) et/ou à un bras de séparation (6) pour séparer le récipient à marquer (8) de la pile (2), le dispositif d'étiquetage (9) étant de préférence disposé sous le bras de retenue inférieur (5).

5. Système de désempilement selon la revendication 3 ou 4, **caractérisé en ce que** le dispositif d'étiquetage (9) et/ou les bras de retenue (4, 5) et/ou le bras de séparation (6) sont réalisés de manière déplaçable par rapport à la pile (2) et de préférence conjointement avec le bras de retenue (4, 5) et/ou avec le bras de séparation (6).

6. Système de désempilement selon l'une quelconque des revendications 3 à 5, **caractérisé en ce que** le dispositif d'étiquetage (9) disposé à côté du récipient à marquer (8) est réalisé de manière déplaçable entre une position de retour écartée du récipient (8) et une position d'application tournée vers le récipient (8), le long d'une course de déplacement.

7. Système de désempilement selon l'une quelconque des revendications 3 à 6, **caractérisé en ce que** le bras de retenue inférieur (5) et/ou le bras de retenue supérieur (4) et/ou le bras de séparation (6) sont réalisés de manière déplaçable le long d'une course de déplacement par rapport à la pile (2) et **en ce que** le dispositif d'étiquetage (9) se trouve dans la position d'application lorsque le bras de retenue inférieur (5) ou le bras de retenue supérieur (4) et/ou le bras de séparation (6) viennent en prise sur la pile (2).

8. Système de désempilement selon l'une quelconque des revendications 3 à 7, **caractérisé en ce que** le dispositif de marquage (7) présente un distributeur d'étiquettes (11) disposé de préférence sous le dispositif d'étiquetage (9).

9. Système de désempilement selon la revendication 1 ou 2, **caractérisé en ce que** le dispositif de marquage (7) présente un dispositif de pulvérisation pour appliquer par pulvérisation un marquage sur le récipient (3).

10. Système de désempilement selon la revendication 9, **caractérisé en ce que** le dispositif de marquage (7) présente un dispositif d'alimentation de colorant pour fournir du colorant au dispositif de pulvérisation.

11. Système de désempilement selon la revendication 4 ou 10, **caractérisé en ce que** le dispositif d'étiquetage (9) est réalisé de manière déplaçable par rapport au distributeur d'étiquettes (11) ou **en ce que** le dispositif de pulvérisation est réalisé de manière déplaçable par rapport au dispositif d'alimentation et **en ce que**, de préférence, le distributeur d'étiquettes (11) ou le dispositif d'alimentation est connecté fixement au dispositif de désempilement (1).

12. Système de désempilement selon la revendication 6 ou 10, **caractérisé en ce que** le distributeur d'étiquettes (11) ou le dispositif d'alimentation est disposé dans la région de la limite de déplacement à l'écart du récipient de la course de déplacement du dispositif d'étiquetage (9).

13. Système de désempilement selon la revendication 11, **caractérisé en ce que** dans la position de retour du dispositif d'étiquetage (9), le côté frontal du dispositif d'étiquetage (9) prévu pour appliquer l'étiquette (10) et une ouverture d'avance des étiquettes du distributeur d'étiquettes (11) sont sensiblement alignés.

14. Système de désempilement selon la revendication 3 ou 9, **caractérisé en ce que** le dispositif d'étiquetage (9) ou le dispositif de pulvérisation est réalisé de manière à pouvoir tourner autour du récipient à marquer (3), ou en ce que le récipient à marquer (3), de préférence la pile (2), est réalisé de manière à pouvoir tourner par rapport au dispositif de marquage (7).

15. Machine de mise en pot (15) pour remplir des pots de fleurs comprenant un système de désempilement selon l'une quelconque des revendications précédentes.
